# EUROPÄISCHE PATENTSCHRIFT

(11) **EP 0 938 090 B1**
(45) Veröffentlichungstag und Bekanntmachung des Hinweises auf die Patenterteilung: **25.06.2003**
(21) Anmeldenummer: 98102921.8
(22) Anmeldetag: 19.02.1998
(51) Int. Cl.: G11B 20/00, G11B 20/10

(54) **Audioabspielgerät**
Audio reproducing device
Appareil de reproduction audio

(43) Veröffentlichungstag der Anmeldung: 25.08.1999
(73) Patentinhaber: Micronas GmbH, 79108 Freiburg (DE)
(72) Erfinder: Becher, Jürgen, Dipl.-Ing., 79312 Emmendingen (DE); Meiner, Jürgen, Dipl.-Ing., 79112 Freiburg (DE); Bächer, Dieter, Dipl.-Ing., 79350 Sexau (DE)
(74) Vertreter: Sauer, Wolfgang

(56) Entgegenhaltungen:
- EP-A- 0 165 320
- EP-A- 0 543 667
- WO-A-96/30906
- DE-A- 19 722 466

## Beschreibung

Die Erfindung betrifft ein Audioabspielgerät für eine Audiodatenquelle, beispielsweise eine CD (=Compact Disk), die in einem standardisierten Datenformat eine Audioinformation enthält, die gelesen, dekodiert und in die einzelnen Signalkomponenten getrennt wird. Die weitere Verarbeitung wie Klang- und Lautstärkeregelung befindet sich in der Regel in einem separaten Endverstärker, kann jedoch aber auch im Audioabspielgerät enthalten sein, insbesondere wenn es sich um ein kleines tragbares Taschengerät handelt. Die von der CD gelesenen Daten werden einem Eingangsdekoder zugeführt, der entsprechend einem Prüfcode eine Fehlerkorrektur durchführt und mit dem korrigierten Datenstrom einen Ausgangsdekoder speist, der den Datenstrom in die jeweiligen Audiosignalkomponenten trennt, beispielsweise in das Links- und Rechts-Signal.

Die Audiodatenquelle ist nicht auf den CD-Betrieb beschränkt, denn es sind andere Audiodatenquellen bekannt, deren Daten in einem standardisierten Datenformat abgegeben werden. Beispielsweise lassen sich über das Internet derartige Audiodatenquellen abfragen. Die Speicherung dieser Daten auf der Empfängerseite erfolgt dann auf der Festplatte im PC oder einem anderen externen Speicher als Datenträger. Zur Zeit stellen CDs eine äußerst preiswerte Einrichtung zur Speicherung von Audiodaten dar, die durch die Möglichkeit des Selberbeschreibens (="Brennen") zusätzlich an Attraktivität gewonnen hat. Damit handelsübliche Audioabspielgeräte verwendet werden können, müssen die zu speichernden Daten nach vorgelegten Standards abgelegt werden, beispielsweise gemäß dem "Sony-Philips-Red/Blue-Book".

Die Übertragung, Speicherung und Wiedergabe von Audiodaten gemäß diesen standardisierten Datenformaten ist sehr verbreitet. Sie hat jedoch den Nachteil, daß diese Datenformate keine Datenkomprimierung vorsehen und mindestens in diesem Gesichtspunkt neueren Verfahren unterlegen sind. Es gibt Verfahren, bei denen der Komprimierungsgrad in einem weiten Bereich gewählt werden kann. Reine Sprachanwendungen erlauben einen höheren Komprimierungsgrad als eine hochwertige Musikwiedergabe. Ein derartiges Verfahren zur Komprimierung und Kodierung ist beispielsweise unter der Bezeichnung "MPEG" bekannt. Die vorhandenen Datenkomprimierungsverfahren möchte man sich bei Aufzeichnungen und Wiedergaben zunutze machen, ohne das System in allen Einzelheiten grundsätzlich zu ändern. Wünschenswert ist beispielsweise ein CD-Abspieler, der sowohl übliche Audio-CDs als auch CDs mit quellkodierten Daten oder auch gemischt beschriebene CDs abspielen kann.

In EP 0 165 320 A1 ist eine Wiedergabeeinrichtung mit einer CD-Speichereinrichtung beschrieben, die Datenpakete mindestens zweier unterschiedlicher Datenformate enthalten kann. Beispielsweise Videodaten, hochwertige Musikdaten und Daten von Standbildern. Die Speichereinrichtung ist hierzu in unterschiedliche Blöcke aufgeteilt, die gegebenenfalls gleichzeitig auslesbar sind, wodurch beispielsweise die Wiedergabe von Standbildern mit Musik hinterlegt werden kann.

Es ist Aufgabe der Erfindung, ein Audioabspielgerät so weiterzubilden, daß es Audioinformationen verarbeiten kann, die unterschiedlichen standardisierten Datenformaten zugeordnet sind und die insbesondere auch eine Datenkomprimierung ermöglichen

Die Lösung der Aufgabe erfolgt dadurch, daß der dem Audioabspielgerät zugeführte Eingangsdatenstrom zwar nach dem üblichen standardisierten Datenformat gebildet ist, jedoch der Datenbereich nicht unmittelbar die Audioinformation der Audiodatenquelle enthält, sondern mittelbar als ein zweites standardisiertes Datenformat, das im Datenbereich des ersten standardisierten Datenformates abgelegt ist. Zur Auswertung dieses verschachtelten Datenformats enthält der Eingangsdekoder außer einem ersten Datenausgang, an dem wie bisher die Audioinformation als ein erster Datenstrom abgreifbar ist, einen zweiten Datenausgang, an dem der im Datenbereich des standardisierten Datenformats als ein zweiter Datenstrom abgreifbar ist. Dieser zweite Datenstrom wird einem Zusatzdekoder zugeführt, der mindestens das zweite standardisierte Datenformat erkennt und die darin enthaltene Audioinformation als einen dritten Datenstrom an den Ausgangsdekoder weiterleitet. Ferner gibt der Zusatzdekoder ein Erkennungssignal an eine Steuereinrichtung ab, die in Abhängigkeit von diesem Erkennungssignal den Ausgangsdekoder auf die Verarbeitung des einen oder anderen Datenstromes einstellt.

Die unterschiedliche Komprimierungsgrade des zweiten Datenformats sind beim MPEG-Standard in einem Zusatzdatenbereich als Information mitenthalten. Mit der Datenkomprimierung ist eine Reduzierung der Datenrate des Eingangsdatenstromes verbunden. Wird als Audiodatenquelle eine Speichereinrichtung verwendet, dann muß sich der Auslesetakt entsprechend dem Komprimierungsgrad ebenfalls ändern. Die Verwendung einer Überabtastung beim Lesen von CDs ist hierbei ohne Bedeutung. Bei mechanisch angetriebenen Speichereinrichtungen, beispielsweise bei einer CD, wird über eine Steuerung der Motordrehzahl die auszulesende Datenrate an den jeweiligen Komprimierungsgrad angepaßt.

Damit der Ausgangsdekoder nur echte Audiodaten zugeführt bekommt, wird er während der Umschaltung der Datenströme stumm geschaltet. Zur Verkürzung dieser Zeitintervalle wird ein Zeitausgleich zwischen beiden Audiodatenströme hergestellt.

Die Erfindung und vorteilhafte Ausgestaltungen werden nun anhand der Figuren der Zeichnung näher erläutert:
Fig. 1 zeigt schematisch als Blockschaltbild ein Audioabspielgerät und
Fig. 2 zeigt im Zeitdiagramm schematisch ein verschachteltes Datenformat.

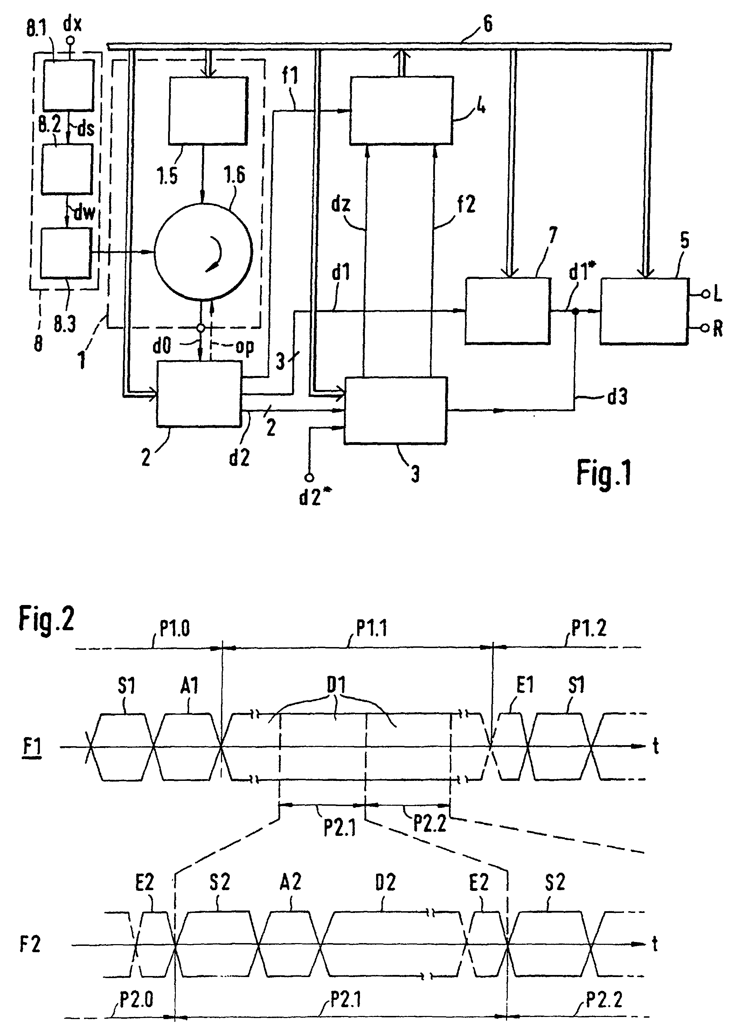

In Fig.1 sind im Blockschaltbild die einzelnen Funktionseinheiten eines Audioabspielgerätes nach der Erfindung dargestellt. Eine Audiodatenquelle 1 liefert einen Eingangsdatenstrom d0 an einen Eingangsdekoder 2, der an einem ersten Datenausgang einen ersten Datenstrom d1 liefert, der in üblicher Weise mittels der mitgelieferten Korrekturdaten fehlerkorrigiert ist. Da außer den Daten auch noch ein Takt- und ein Ident-Signal übertragen wird, hat der Datenbus für den ersten Datenstrom d1 drei Leitungen.

Entsprechend der Erfindung enthält der Eingangsdekoder 2 einen zweiten Datenausgang, an dem ein zweiter Datenstrom d2 abgreifbar ist, der dem fehlerkorrigierten Datenbereich D1 des Eingangsdatenstromes d0 entspricht. Da außer diesen Daten auch noch eine Taktsignal an einen Zusatzdekoder 3 übertragen wird, hat der zughörige Datenbus zwei Leitungen. Gegebenenfalls kann dem Zusatzdekoder 3 der zweite Datenstrom d2 auch als externer Datenstrom d2* über einen eigenen Anschluß zugeführt werden. Ein derartiger Anschluß ist beispielsweise sinnvoll, wenn das Audioabspielgerät an einen Computer angeschlossen oder Teil dieses Computers ist, mit dem beispielsweise Audiodatenquellen aus dem Internet abgefragt werden.

Der Eingangsdekoder 2 gibt schließlich an einen dritten Ausgang ein Fehlersignal f1 ab, das einer Steuereinrichtung 4 zugeführt ist. Auch der Zuatzdekoder 3 gibt ein Fehlersignal f2 an die Steuereinrichtung 4 ab, die aufgrund dieser Fehlersignale f1, f2 einen Ausgangsdekoder 5 sofort stumm schalten kann. Die Fehlersignale f1, f2 werden gebildet, wenn die zugehörigen Dekoder 2, 3 keine auswertbaren Daten erkennen oder die Daten zu sehr gestört sind, so daß eine Korrektur nicht mehr möglich ist.

Der Zusatzdekoder 3 überprüft laufend die Daten des zweiten Datenstromes d2, ob er in ihnen ein bekanntes Datenformat F2 erkennt. Erkennt er eines, dann sendet er ein Erkennungssignal dz an die Steuereinrichtung 4 und signalisiert damit, daß ein verschachteltes Datenformat F1, F2 vorliegt das er auch funktionsgerecht verarbeiten kann. Wenn der Zusatzdekoder 3 mehrere Datenformate erkennen kann, dann liefert er mit dem Erkennungssignal dz auch die zugehörige Formatinformation an die Steuereinrichtung 4. Diese bewirkt über einen Steuerbus 6 die erforderlichen Schaltungen im Audioabspielgerät. Handelt es sich bei der Audiodatenquelle 1 um eine mechanisch angetriebene Abspieleinrichtung, beispielsweise ein CD- oder Bandlaufwerk, dann paßt die Steuereinrichtung 4 über eine Motorsteuerung 1.5 die Drehzahl an die reduzierte Abtastrate an.

Der Zusatzdekoder 3 liefert die dekodierten Audiodaten als dritten Datenstrom d3 an den Ausgangsdekoder 5. Da der Zusatzdekoder 3 dem Eingangsdekoder 2 nachgeschaltet ist, ist der dritte Datenstrom d3 in jedem Fall gegenüber dem ersten Datenstrom d1 verzögert. Damit bei der Umschaltung vom ersten auf den dritten Datenstrom d1, d3 und umgekehrt im Ausgangsdekoder 5 keine zu großen Störintervalle für die Stummschaltung auftreten, wird der erste Datenstrom d1 mittels eines Zwischenspeichers 7 etwa um die Verarbeitungszeit des zweiten Datenstromes d2 im Zusatzdekoder 3 verzögert und bildet den Datenstrom d1*. Die Umschaltung des ersten und dritten Datenstromes d1*,d3 erfolgt entweder mittels eines elektronischen Umschalters oder durch eine Dreizustands-Steuerung (Dreizustand = tristate der Datenausgänge des Zwischenspeichers 7 und Zusatzdekoders 3. In diesem Fall können die Datenleitungen zusammengeschaltet und einem einzigen Dateneingang des Ausgangsdekoders 5 zugeführt werden. Die Steuerung der Dreizustands-Datenausgänge erfolgt durch die Steuereinrichtung 4 über den Steuerbus 6. Im Ausführungsbeispiel von Fig. 1 ist die Audiodatenquelle 1 wie bereits angegeben als CD-Abspieleinrichtung schematisch dargestellt. Eine rotierende CD-Scheibe 1.6 wird von dem Eingangsdekoder 2 optisch abgetastet und erzeugt den Eingangsdatenstrom d0. Die vom Eingangsdekoder 2 ausgehende optische Abtastung ist durch eine gestrichelte Linie op schematisch dargestellt.

Die in der Audiodatenquelle 1 dargestellten Speichereinrichtung 1.6 sollte in der Regel mechanisch leicht auswechselbar sein. Dies trifft bekanntlich auf den Wechselmechanismus üblicher CD-Laufwerke zu und noch mehr, wenn die CD-Scheibengröße reduziert wird. Bei zunehmender Speicherkapazität von Festkörperspeichern dürften jedoch mechanisch bewegte Speichereinrichtungen mindestens in Teilbereichen durch austauschbare Massespeicher ersetzt werden, weil dann die relativ aufwendige und störanfällige Mechanik nicht mehr erforderlich ist.

Da die Audiodatenquelle 1 nicht nur als reine Abspieleinrichtung angenommen werden soll, ist in Fig. 1 eine Programmiereinrichtung 8 als Blockschaltung dargestellt, die das verschachtelte Datenformat für die Speichereinrichtung 1.6 erzeugt. Die Programmiereinrichtung 8 enthält dabei in Signalflußrichtung eine erste und zweite Kodiereinrichtung 8.1 bzw. 8.2 und eine Schreibeinrichtung 8.3. Die zweite Kodiereinrichtung 8.2 und die Schreibeinrichtung 8.3 entsprechen den Funktionsblöcken handelsüblicher Schreibeinrichtungen für das übliche standardisierte Datenformat F1, die z.B. für CDs unter der Bezeichnung "Brenner" bekannt sind. Entsprechend der Erfindung werden die zu speichernden Audiodaten dx jedoch zuerst mittels der ersten Kodiereinrichtung 8.1 in das zweite standardisiertes Datenformat F2 umgesetzt und bildet einen Datenstrom ds, der gleichsam als ein "quasi-Audiodatenstrom" der zweiten Kodiereinrichtung 8.2 zur Umsetzung in das erste Datenformat F1 zugeführt wird. Der resultierende Datenstrom dw entspricht dem ersten standardisierten Datenformat F1 und wird mittels der Schreibeinrichtung 8.3 auf die Speichereinrichtung 1.6 aufgebracht.

Der Vorteil der Erfindung besteht darin, daß das Abspielgerät sehr flexibel ist, indem es mindestens eines der verbreiteten Datenformate verarbeiten kann, daneben aber auch zusätzliche Datenformate, die einen hohen Komprimierungsgrad ermöglichen. Die Laufdauer vorhandener Speichereinrichtungen 1.6 läßt sich damit erheblich vergrößern. Dies gilt bereits für Aufzeichnungen mit normaler oder hoher Qualität.

Eine weitere Verlängerung der Laufzeit wird erreicht, wenn für die Aufzeichnung und Wiedergabe eine geringere Qualitätsstufe verwendet wird. Dies ist beispielsweise bei reinen Sprachaufzeichnungen sinnvoll. Ein weiterer Vorteil besteht darin, daß bei einer monolithischen Integration einzelner Schaltungsteile der zusätzliche Aufwand gering ist, weil Funktionen mindestens zum Teil im Multiplexbetrieb ablaufen oder von nicht ausgelasteten Prozessoren mitübernommen werden.

In Fig. 2 ist mittels zweier Zeitdiagramme das Schema der verschachtelten Datenformate dargestellt. Das erste standardisierte Datenformat F1, das in aufeinanderfolgenden Datenpaketen P1.0, P1.1, P1.2 übertragen wird, enthält eingangsseitig einen Synchronbereich S1 zur Synchronisierung der Datenpakete auf der Empfängerseite, einen Zusatzdatenbereich A1, der Informationen über den jeweiligen Datenstandard, die Länge des Datenformats oder sonstige Informationen enthalten kann, dann den eigentlichen Datenbereich D1, in dem die zu übertragenden Audiodaten mit einem Fehlerkorrekturkode enthalten sind und schließlich einen Endbereich E1, der das Ende des jeweiligen Datenformats und Datenpakets signalisiert. Diese grundsätzliche Datenstruktur läßt selbstverständlich Abweichungen in der Art und Länge der einzelnen Blöcke usw. zu. Es können auch zusätzliche Bereiche vorhanden sein oder andere Bereiche in Wiederholung. Das nachfolgende Datenpaket P1.2 enthält wieder die gleichen Blöcke, den Synchronbereich S1, den Zusatzdatenbereich A1 usw.

Das zweite standardisierte Datenformat F2, das ebenfalls die Datenstruktur in den aufeinanderfolgenden Datenpaketen definiert, unterscheidet sich grundsätzlich nicht vom Aufbau des ersten Datenformates F1. Einer Synchroninformation S2 folgt eine Zusatzdateninformation A2, die beispielsweise beim MPEG-Standard den jeweiligen Komprimierungsgrad der im Datenbereich D2 enthaltenen Audioinformation definiert. Auch hier wird die Länge der Datenpakete entweder im Zusatzdatenbereich A2 angegeben oder durch die Endinformation E2. Dem Datenpaket P2.1 folgt das strukturgleiche neue Datenpaket P2.2. Die Zeitachse t beim Datenformat F2 ist gegenüber der des Datenformats F1 in der Darstellung gedehnt.

## Patentansprüche

1. Audioabspielgerät für einen Eingangsdatenstrom (d0), der von einer Audiodatenquelle (1) in einem standardisierten Datenformat (F1) abgegeben wird, mit einem Eingangsdekoder (2) zur Bildung eines die Audioinformation enthaltenden ersten Datenstromes (d1), der mittels eines Ausgangsdekoders (5) in seine Audiosignalkomponenten(L, R) zerlegt wird, und einer Steuereinrichtung (4),
**gekennzeichnet durch** folgende Merkmale:
- der Eingangsdekoder (2) enthält außer einem ersten Datenausgang (2.1), an dem der erste Datenstrom (d1) abgreifbar ist, einen zweiten Datenausgang (2.2), an dem die im Datenbereich (D2) des standardisierten Datenformats (F1) enthaltenen Daten als ein zweiter Datenstrom (d2) abgreifbar sind,
- an den zweiten Datenausgang (2.2) des Eingangsdekoders (2) ist ein Zusatzdekoder (3) angeschlossen, der ein im zweiten Datenstrom (d2) gegebenenfalls enthaltenes zweites Datenformat (F2) erkennt und die darin enthaltene Audioinformation als einen dritten Datenstrom (d3) an den Ausgangsdekoder (5) weiterleitet, und
- der Zusatzdekoder (3) gibt in Abhängigkeit vom erkannten Datenformat (F2) ein Erkennungssignal (dz) an die Steuereinrichtung (4) ab, die in Abhängigkeit von diesem Erkennungssignal (dz) den Ausgangsdekoder (5) auf die Verarbeitung des ersten oder dritten Datenstroms (d1, d3) einstellt.

2. Audioabspielgerät nach Anspruch 1, das die Audiodatenquelle (1) enthält, **dadurch gekennzeichnet, daß** die Audiodatenquelle (1) eine Speichereinrichtung (1.6) enthält, die insbesondere auf einfache Weise austauschbar ist.

3. Audioabspielgerät nach Anspruch 2, **dadurch gekennzeichnet, daß** die Speichereinrichtung (1.6) mindestens teilweise mechanisch angetrieben ist.

4. Audioabspielgerät nach Anspruch 2 oder 3, **dadurch gekennzeichnet, daß** die Steuereinrichtung (4) in Abhängigkeit vom Erkennungssignal (dz) die Auslesegeschwindigkeit der Speichereinrichtung (1.6) ändert.

5. Audioabspielgerät nach Anspruch 3 oder 4, **dadurch gekennzeichnet, daß** die Auslesegeschwindigkeit der Speichereinrichtung (1.6) von einer Motordrehzahl abhängig ist, die von der Steuereinrichtung (4) mittels einer Motorsteuerung (1.5) auf mindestens einen vorbestimmten Wert geregelt ist.

6. Audioabspielgerät nach einem der Ansprüche 1 bis 5, **dadurch gekennzeichnet, daß** der Eingangsdekoder (2) und/oder der Zusatzdekoder (3) beim Nichterkennen oder beim Auftreten von Fehlern im Eingangsdatenstrom (d0), ersten oder dritten Datenstrom (d1, d3) ein erstes bzw. zweites Fehlersignal (f1, f2) erzeugt, das den Ausgangsdekoder (5) stumm schaltet.

7. Audioabspielgerät nach einem der Ansprüche 1 bis 6, **dadurch gekennzeichnet**, der erste Datenstrom (d1) einem Zwischenspeicher (7) zugeführt ist, der im Wesentlichen einen Zeitausgleich zwischen dem ersten und dritten Datenstrom (d1, d3) bewirkt.

8. Audioabspielgerät nach einem der Ansprüche 1 bis 7, **dadurch gekennzeichnet, daß** die Datenausgänge des Zwischenspeichers (7) und des Zusatzdekoders (3) als Dreizustands-Ausgänge ausgebildet sind.

## Claims

1. An audio playback apparatus for an input data stream (d0) delivered by an audio data source (1) in a standardized data format (F1), comprising an input decoder (2) for forming a first data stream (d1), which contains the audio information and is separated into its audio signal components (L, R) by means of an output decoder (5), and a control unit (4),
**characterized by** the following features:
- The input decoder (2) has, in addition to a first data output (2.1) at which the first data stream (d1) is provided, a second data output (2.2) at which the data contained in the data field (D1) of the standardized data format (F1) is provided as a second data stream (d2);
- the second data output (2.2) of the input decoder (2) has an additional decoder (3) connected thereto which detects a second data format (F2) possibly contained in the second data stream (d2) and routes the audio information of the second data format (F2) as a third data stream (d3) to the output decoder (5); and
- upon detection of the second data format (F2), the additional decoder (3) provides a detection signal (dz) to the control unit (4) which in response to this detection signal (dz) sets the output decoder (5) to the processing of the first or third data stream (d1, d3).

2. An audio playback apparatus as claimed in claim 1 which comprises the audio data source (1), **characterized in that** the audio data source (1) comprises a storage device (1.6), particularly an easily replaceable storage device.

3. An audio playback apparatus as claimed in claim 2, **characterized in that** the storage device (1.6) is at least partially driven mechanically.

4. An audio playback apparatus as claimed in claim 2 or 3, **characterized in that** the control unit (4) changes the read rate of the storage device (1.6) in response to the detection signal (dz).

5. An audio playback apparatus as claimed in claim 3 or 4, **characterized in that** the read rate of the storage device (1.6) is dependent on a motor speed which is regulated at at least one predetermined value by the control unit (4) via a motor controller (1.5).

6. An audio playback apparatus as claimed in any one of claims 1 to 5, **characterized in that** when detecting no evaluable data or on the occurrence of errors in the input data stream (d0), the input decoder (2) and/or the additional decoder (3) generate a first error signal (f1) and/or a second error signal (f2), respectively, which mute the output decoder (5).

7. An audio playback apparatus as claimed in any one of claims 1 to 6, **characterized in that** the first data stream (d1) is fed to a buffer (7) which essentially provides temporal compensation between the first and third data streams (d1, d3).

8. An audio playback apparatus as claimed in any one of claims 1 to 7, **characterized in that** the data outputs of the buffer (7) and the additional decoder (3) are tristate outputs.

## Revendications

1. Appareil de reproduction audio qui est destiné à un flux de données d'entrée (d0), qui est fourni par une source de données audio (1) dans un format de données normalisé (F1), et qui comporte un décodeur d'entrée (2) pour la formation d'un premier flux de données (d1), qui contient l'information audio et qui est décomposé par un décodeur de sortie (5) pour obtenir ses composantes de signal audio (L, R), et un dispositif de commande (4),
**caractérisé par** les caractéristiques suivantes :
- le décodeur d'entrée (2) comprend, en plus d'une première sortie de données (2.1), sur laquelle on peut prélever le premier flux de données (d1), une deuxième sortie de données (2.2) sur laquelle on peut prélever les données contenues dans la zone de données (D2) du format de données normalisé (F1) sous la forme d'un deuxième flux de données (d2),
- sur la deuxième sortie de données (2.2) du décodeur d'entrée (2) est connecté un décodeur supplémentaire (3) qui reconnaît un éventuel deuxième format de données (F2) éventuellement contenu dans le deuxième flux de données (d2) et qui transmet l'information audio qui y est contenue sous la forme d'un troisième flux de données (d3) au décodeur de sortie (5), et
- le décodeur supplémentaire (3) fournit, en fonction du flux de données (F2) reconnu, un signal de reconnaissance (dz) au dispositif de commande (4) qui règle, en fonction de ce signal de reconnaissance (dz), le décodeur de sortie (5) pour le traitement du premier ou du troisième flux de données (d1, d3).

2. Appareil de reproduction audio selon la revendication 1, **caractérisé en ce que** la source de données audio (1) comprend un dispositif de mémoire (1.6) qui peut être échangé de manière simple.

3. Appareil de reproduction audio selon la revendication 2, **caractérisé en ce que** le dispositif de mémoire (1.6) est entraîné, au moins partiellement, de manière mécanique.

4. Appareil de reproduction audio selon la revendication 2 ou 3, **caractérisé en ce que** le dispositif de commande (4) modifie la vitesse de lecture du dispositif de mémoire (1.6) en fonction du signal de reconnaissance (dz).

5. Appareil de reproduction audio selon la revendication 3 ou 4, **caractérisé en ce que** la vitesse de lecture du dispositif de mémoire (1.6) est une fonction d'une vitesse de rotation d'un moteur qui est régulée à au moins une valeur prédéterminée par le dispositif de commande (4) au moyen d'un dispositif de commande du moteur (1.5).

6. Appareil de reproduction audio selon l'une quelconque des revendications 1 à 5, **caractérisé en ce que** le décodeur d'entrée (2) et/ou le décodeur supplémentaire (3) produisent, dans le cas d'un défaut de reconnaissance ou dans le cas de l'apparition d'erreurs dans le flux de données d'entrée (d0) concernant le premier ou le troisième flux de données (d1, d3), un premier ou un deuxième signal d'erreur (f1, f2) qui commute le décodeur de sortie (5) en position de silence.

7. Appareil de reproduction audio selon l'une quelconque des revendications 1 à 6, **caractérisé en ce que** le premier flux de données (d1) est envoyé à une mémoire intermédiaire (7) qui réalise essentiellement une compensation de temps entre le premier et le troisième flux de données (d1, d3).

8. Appareil de reproduction audio selon l'une quelconque des revendications 1 à 7, **caractérisé en ce que** les sorties de données de la mémoire intermédiaire (7) et du décodeur supplémentaire (3) sont réalisées sous la forme de sorties à trois états.
